# EUROPÄISCHE PATENTANMELDUNG

(11) **EP 0 990 964 A1**
(43) Veröffentlichungstag der Anmeldung: **05.04.2000**
(21) Anmeldenummer: 98118288.4
(22) Anmeldetag: 28.09.1998
(51) Int. Cl.: G05B 19/042

(54) **Verfahren zum Betrieb eines Automatisierungssystems**

(71) Anmelder: SIEMENS AKTIENGESELLSCHAFT, 80333 München (DE)
(72) Erfinder: Opatherny, Thilo, Dipl.-Inf. (Univ.), 90453 Nürnberg (DE); Donhauser, Richard, Dipl.-Ing. (FH), 92284 Oppenricht (DE); Lind, Pirmin, Dipl.-Ing. (FH), 76889 Birkenhördt (DE)

(57) **Zusammenfassung**

Es wird ein Verfahren zum Betrieb eines zumindest ein Automatisierungsgerät sowie ein mit diesem kommunikativ verbundenes Programmiergerät umfassenden Automatisierungssystems, wobei das Automatisierungsgerät ein Anwenderprogramm, insbesondere ein Programm zur Steuerung und/oder Überwachung eines externen technischen Prozesses, ausführt und wobei durch das Programmiergerät die Ausführung des Anwenderprogramms überwacht wird, indem an Programmiergerät eine oder mehrere Datenadressen (1132, 1133) des Anwenderprogramms zur Überwachung ausgewählt werden, angegeben, bei dem
- am Programmiergerät für jede zur Überwachung ausgewählte Datenadresse (1132, 1133) eine Codeadresse (1131) - eine Adresse des Anwenderprogramms, insbesondere eine Adresse in unmittelbarer Nähe eines den Inhalt der ausgewählten Datenadresse (1132, 1133) beeinflussenden Abschnitts des Anwenderprogramms - ausgewählt wird,
- die ausgewählte Datenadresse (1132, 1133) zusammen mit der Codeadresse (1131) im Rahmen eines Anforderungstelegramms (AT) an das Automatisierungsgerät übermittelt wird,
- der Inhalt der ausgewählten Datenadresse (1132, 1133) bei Erreichen der jeweiligen Codeadresse (1133) während der Ausführung des Anwenderprogramms aufgezeichnet wird und
- der aufgezeichnete Inhalt der Datenadresse (1132, 1133) im Rahmen eines Ergebnistelegramms (ET) an das Programmiergerät übermittelt wird.

## Beschreibung

Die vorliegende Erfindung betrifft ein Verfahren zum Betrieb eines Automatisierungssystems, durch das ein zur Steuerung und/oder Überwachung eines technischen Prozesses vorgesehenes Automatisierungsgerät mittels eines zum Bedienen und Beobachten des Automatisierungsgerätes vorgesehenen Programmiergerät überwachbar ist.

Zum Zweck der Inbetriebnahme und der Wartung des Automatisierungsgerätes ist die Beobachtung der auf dem Automatisierungsgerät ablaufenden Software vorgesehen. Wünschenswert ist dabei, daß durch die Beobachtung die Ausführung der Software nicht merklich gestört oder gar unterbrochen wird.

Die Aufgabe der vorliegenden Erfindung besteht folglich darin, ein Verfahren zum Betrieb eines Automatisierungssystems anzugeben, bei dem das Automatisierungsgerät durch ein Programmiergerät bei weitestgehender Vermeidung störender Einflüsse überwachbar ist.

Diese Aufgabe wird mit einem Verfahren zum Betrieb eines zumindest ein Automatisierungsgerät sowie ein mit diesem kommunikativ verbundenes Programmiergerät umfassenden Automatisierungssystems, wobei das Automatisierungsgerät ein Anwenderprogramm, insbesondere ein Programm zur Steuerung und/oder Überwachung eines externen technischen Prozesses, ausführt und wobei durch das Programmiergerät die Ausführung des Anwenderprogramms überwacht wird, indem am Programmiergerät eine oder mehrere Datenadressen des Anwenderprogramms zur Überwachung ausgewählt werden, dadurch gelöst,
- daß am Programmiergerät für jede zur Überwachung ausgewählte Datenadresse eine Codeadresse- eine Adresse des Anwenderprogramms, insbesondere eine Adresse in unmittelbarer Nähe eines den Inhalt der ausgewählten Datenadresse beeinflussenden Abschnitts des Anwenderprogramms - ausgewählt wird,
- daß die ausgewählte Datenadresse zusammen mit der Codeadresse im Rahmen eines Anforderungstelegramms an das Automatisierungsgerät übermittelt wird,
- daß der Inhalt der ausgewählten Datenadresse bei Erreichen der jeweiligen Codeadresse während der Ausführung des Anwenderprogramms aufgezeichnet wird und
- daß der aufgezeichnete Inhalt der Datenadresse im Rahmen eines Ergebnistelegramms an das Programmiergerät übermittelt wird.

Über eine Datenadresse sind alle im Automatisierungsgerät vorhandenen Speicherbereiche referenzierbar. Entsprechend bezeichnet im vorliegenden Zusammenhang der Ausdruck Datenadresse nicht nur eine explizite Adresse im Bereich des Anwenderprogramms sondern ggf. auch ein durch eine Start- und Endadresse vorgegebener Datenbereich und darüber hinaus ggf. auch einzelne Register bzw. Registersätze.

Die Software auf dem Automatisierungsgerät läßt sich grob in die sogenannte Firmware und das Anwenderprogramm unterteilen. Das Anwenderprogramm gliedert sich in im wesentlichen voneinander unabhängige Module, die im folgenden als Bausteine bezeichnet werden und die auf dem Programmiergerät erstellt und auf das Automatisierungsgerät geladen werden und dort unter Steuerung der Firmware des Automatisierungsgerätes nach bestimmten Regeln zur Ausführung gelangen.

Üblicherweise findet bei Automatisierungsaufgaben eine zyklische Bearbeitung statt, wobei z.B. einige Bausteine in einem festen Zeitraster immer wieder gestartet werden. Spezielle Bausteine werden nach ihrer Ausführung auch sofort wieder gestartet, wobei dies als sogenannter freier Zyklus bezeichnet wird, ein Zyklus also, dem kein festes Zeitraster zugrunde liegt.

Wenn das Automatisierungsgerät mehrere Prozessoren aufweist, ist es möglich, daß mehrere Bausteine gleichzeitig ausgeführt werden. Steht dagegen nur ein Prozessor zur Verfügung, so werden die jeweiligen Bausteine nach einem Zeitscheibenverfahren zur Ausführung gebracht, wobei beim Benutzer der Eindruck der gleichzeitigen Bearbeitung der jeweiligen Bausteine entsteht.

Die Bausteine werden vom Anwender in dafür vorgesehenen, ggf. auch unterschiedlichen Sprachen erstellt und durch ein auf dem Programmiergerät ablauffähiges Übersetzerprogramm in die Maschinensprache des Automatisierungsgerätes transferiert. Beim Anwendungsfall gemäß dem Ausführungsbeispiel kommen z.B. die Programmiersprachen KOP, FUP, AWL, SCL, HIGRAPH, GRAPH 7, etc. zum Einsatz.

Das Automatisierungsgerät führt die einzelnen Maschinenbefehle eines Bausteins nacheinander aus. Dabei ist jeder einzelne Maschinenbefehl des Automatisierungsgerätes durch eine Codeadresse eindeutig referenzierbar. Die Codeadresse wird spezifiziert durch den Baustein, dessen Typ und dessen Nummer, und den einzelnen Maschinenbefehl, der durch seine jeweilige Adresse im Baustein repräsentiert wird. Das obengenannte Anforderungstelegramm enthält eine oder mehrere dieser eben beschriebenen Codeadressen.

Zur Auswahl der gewünschten Code- bzw. Datenadressen können bekannte Methoden verwendet werden, indem z.B. zur Auswahl einer Datenadresse bzw. eines Datenadressbereichs eine bestimmte Anweisung des Anwenderprogramms bzw. ein Abschnitt mit mehreren Programmanweisungen markiert und diese Markierung als Auswahl interpretiert wird. Alternativ ist es selbstverständlich auch möglich, diese Auswahl mittels expliziter entsprechender Angaben zu treffen, indem z.B. die relevanten Datenadressen manuell eingegeben werden.

In einem Automatisierungsgerät werden gemäß einer abstrakten Betrachtungsweise von Sensoren gelieferte Daten verarbeitet und gemäß den Verarbeitungsergebnissen Aktoren angesteuert. Je nach verwendeter Sprache gibt es dazu verschiedene Konstrukte. Gemeinsam ist allen, daß sie verschiedene Datenbereiche unterscheiden und diese in ihren Befehlen adressieren können. Bei allen Sprachen ist es möglich, einen einzelnen Sensor abzufragen, einen einzelnen Aktor anzusteuern und Ergebnisse zwischenzuspeichern, z.B. um Zustände über Bausteingrenzen hinweg zu halten. Je nach Maschinennähe der jeweils verwendeten Sprache unterstützt der Sprachumfang auch eine direkte Manipulation von Registern. Die kleinste auf diese Weise adressierbare Einheit ist eine Datenadresse.

Zum Zweck der Überwachung des Automatisierungsgerätes wird vom Programmiergerät ein Auftrag mittels des Anforderungstelegramms an das Automatisierungsgerät gesendet. Diese Anforderung enthält eine oder mehrere Codeadressen und pro Codeadresse eine oder mehrere Datenadressen.

Das Anforderungstelegramm weist ein Headersegment, ein Einstiegsdatensatzsegment sowie ein oder mehrere Watchpointsegmente mit jeweils zumindest einer Codeadresse und einer oder mehreren Datenadressen auf. Mit den Datenadressen sind alle im Maschinenmodell vorhandenen Speicherbereiche ansprechbar auch die Register, insbesondere aber Bitgruppen, weil viele Sensoren und Aktoren nicht nur einzelne Bits liefern, sondern Gruppen von Bits, weswegen auch größere zusammenhängende Bereiche mit einer Datenadresse ansprechbar sind.

Das Automatisierungsgerät zeichnet bei Erreichen einer der im Anforderungstelegramm spezifizierten Codeadressen die im selben Watchpointsegment zusammen mit dieser Codeadresse angegebenen Daten auf. Zusätzlich kann eine Triggerbedingung vorgegeben werden, die beim Erreichen einer Codeadresse erfüllt sein muß, damit die Aufzeichnung beginnt.

Das Automatisierungsgerät übermittelt seinerseits nach jedem Zyklus, reguliert durch eine Flußkontrolle, die angeforderten Daten an das Programmiergerät, bis der Auftrag durch andere Anforderungstelegramme gestoppt oder gelöscht wird.

Aufbau und Struktur des Ergebnistelegramms sind ganz analog zum Anforderungstelegramm. Insofern weist auch das Ergebnistelegramm ein Headersegnent, ein Einstiegsdatensatzsegment sowie ein oder mehrere Watchpointsegmente mit jeweils zumindest einer Codeadresse und einer oder mehreren Datenadressen auf.

Die in den sogenannten höheren Programmiersprachen zur Verfügung stehenden Konstrukte werden auf die Befehle der Zielmaschine abgebildet. Dabei kann es vorkommen, daß bestimmte Daten nur temporär in den jeweiligen Registern des Automatisierungsgerätes vorhanden sind, ohne jemals unter einer für den Anwender referenzierbaren Datenadresse gespeichert zu werden. Um auch solche Zwischenergebnisse auf der Seite des Programmiergerätes korrekt beobachten zu können, ist es vorgesehen, in einem Anforderungstelegramm zu einer Codeadresse auch Register angeben zu können. Als Beispiel sei hier eine einfache logische Verknüpfung der Form "WENN Sensor 1 UND Sensor 2 ODER Sensor 3, DANN Aktor 1" genannt, wobei das Ergebnis der UND-Verknüpfung in einem Register zwischengespeichert wird, um dieses Zwischenergebnis bei der nachfolgenden ODER-Verknüpfung verwenden zu können. Das letztendliche Verknüpfungsergebnis steht als Inhalt der Variablen Aktor 1 schließlich wieder direkt in einer Datenadresse zur Verfügung. Das Zwischenergebnis ginge allerdings verloren, wenn nicht auch der Zugriff auf das Register selbst möglich wäre.

An dieser Stelle wird auch unmittelbar ersichtlich, warum im Anforderungstelegramm Codeadressen und zu jeder dieser Codeadressen Datenadressen angebbar sind.

Da es nämlich in Bausteinen durchaus vorkommen kann, daß eine Datenadresse mehrfach beschrieben und gelesen wird, ist es vorteilhaft, die Daten nicht am Ende des Zyklus zu beobachten, sondern an all den Codeadressen, an denen es referenziert wird. Nur so kann das Anwenderprogramm auf der Seite des Programmiergerätes nachvollzogen werden.

Insbesondere im vorliegend geschilderten Fall reicht es z.B. nicht aus, das Register, in dem das Zwischenergebnis der oben beschriebenen UND-Verknüpfung zwischengespeichert wird, anzugeben, da dieses Register zu diversen Zeitpunkten zur Speicherung unterschiedlichster Zwischenergebnisse verwendet werden kann. Nur unmittelbar nach der Verknüpfung "WENN Sensor 1 UND Sensor 2" gibt der Inhalt des Registers das Ergebnis der UND-Verknüpfung wieder. Das Ergebnis der nachfolgenden ODER-Verknüpfung wird im selben Register zwischengespeichert, so daß das Ergebnis der UND-Verknüpfung verloren geht.

Im Betrieb zeichnet das Automatisierungsgerät die mit dem Anforderungstelegramm spezifizierten Daten auf, um sie zu einem im Vergleich zum Zeitpunkt der Aufzeichnung späteren Zeitpunkt zu senden. Im allgemeinen kann das Automatisierungsgerät nur eine vergleichsweise kleine Menge von Daten aufzeichnen. Insbesondere ist die Menge der aufzuzeichnenden Daten jedoch durch Art und Geschwindigkeit einerseits des Automatisierungsgerätes sowie andererseits der Kommunikationsmittel zwischen Automatisierungsgerät und Programmiergerät sowie der durch den Anwender tolerierten Störung der Programmausführung auf seiten des Automatisierungsgerätes vorgegeben. Durch die Menge der transferierbaren Daten ist eine Obergrenze für die Menge der aufzeichenbaren Daten festgelegt, auch wenn das Automatisierungsgerät eine größere Menge von Daten theoretisch aufzeichnen könnte. Es ist also angezeigt, mit dem Anforderungstelegramm nur diejenigen Informationen anzufordern, die später auch zur Anzeige auf dem Programmiergerät gelangen.

Höhere Spezialsprachen für Schrittketten (z.B. HIGRAPH, GRAPH 7, ...) verwenden zur Programmierung der Weiterschaltbedingung und der im jeweiligen Schritt auszuführenden Aktion wiederum Basissprachen (z.B. AWL, KOP, FUP, ...). Für den Anwender ist es nun einerseits wichtig, zu erkennen, welcher Schritt momentan aktiv ist und darüber hinaus speziell auch die Weiterschaltbedingung zu betrachten. Dafür ist im allgemeinen die Betrachtung einiger weniger Codeadressen ausreichend, wobei insbesondere die Menge der relevanten Codeadressen im Vergleich zur Größe des Bausteins relativ gering ist. Allerdings sind die relevanten Codeadressen üblicherweise innerhalb des Bausteins verstreut und darüber hinaus noch mit dem Laufzeitsystem der Schrittkettensteuerung vermischt. Aufgrund der begrenzten Möglichkeiten hinsichtlich des Datentransfers zwischen Automatisierungsgerät und Programmiergerät ist es wenig sinnvoll, den Baustein komplett zu beobachten, da dies unter Umständen sehr schnell mit Kapazitätsobergrenzen bezüglich des Datentransfers kollidiert. Tatsächlich werden ja auch nur die für die Berechnung der Weiterschaltbedingungen notwendigen Codeadressen benötigt. Folglich werden nur die tatsächlich erforderlichen Codeadressen an das Programmiergerät transferiert.

Ein ähnliches Problem ergibt sich bei der Programmierung von Bausteinaufrufen mit Parametern. Im Einzelfall sind zur Übertragung der Parameterwerte eine Vielzahl einzelner Befehle erforderlich. Somit gäbe es nur wenige für die Beobachtung tatsächlich relevante Codeadressen, die über einen größeren Bereich des Bausteins verteilt sind. Für einen solchen Fall ist vorgesehen, die an den Baustein zu übertragenden Werte vom sogenannten "Stack" zu übernehmen. Das Ablegen von Parametern beim Aufruf von Unterprogrammen auf dem Stack ist eine allgemein bekannte Methode, um Parameter ausgehend von einem ersten Programmbereich an einen zweiten, davon unabhängigen Programmbereich zu übergeben. Es zeigt sich also, daß alle Werte, die in einen Baustein übertragen werden, vor dem eigentlichen Maschinenbefehl zum Bausteinaufruf vom Stapel oder sogar aus einem speziellen Instanzdatenbaustein gelesen werden können. Analog können alle Werte, die aus dem Baustein übertragen werden, nach dem eigentlichen Maschinenbefehl zum Bausteinaufruf vom Stapel oder wiederum aus dem Instanzdatenbaustein gelesen werden. Zur Beobachtung der Parameterübergabe sind für jeden Bausteinaufruf zwei Codeadressen erforderlich. Pro Codeadresse können jedoch im Einzelfall mehrere Datenadressen erforderlich sein, wobei sich die Anzahl der erforderlichen Datenadressen nach der Anzahl der Ein- bzw. Ausgabeparameter richtet.

Die Kontrolle des Datenflusses, in anderem Zusammenhang auch die sogenannte Flußkontrolle, wird folgendermaßen realisiert: Nach Ausführung der zu einem Zyklus gehörigen Bausteine wird der durch das Anforderungstelegramm initiierte Auftrag blokkiert, d.h. es werden keine weitere Daten mehr aufgezeichnet, auch wenn das Automatisierungsgerät einen Befehl an einer durch das Anforderungstelegramm spezifizierten Codeadresse ein weiteres Mal ausführt. Nun wird das Senden der angeforderten Daten angestoßen. Das Senden erfolgt dabei parallel zur Ausführung des Anwenderprogramms. Ein solcher Sendevorgang kann sich im Bedarfsfall auch über mehrere Zyklen erstrecken, wobei dann die aufgezeichneten Daten abschnittsweise übertragen werden. Während des Sendens wird aufgrund des abschnittsweisen Sendens parallel zur Ausführung des Anwenderprogramms, insbesondere auch aufgrund der möglichen Aufteilung der zu sendenden Daten auf mehrere Zyklen, das Anwenderprogramm nur unmerklich gestört. Erst nachdem das Programmiergerät die auf diese Weise empfangenen Daten ausgewertet und dargestellt hat, schickt dieses ein Telegramm, welches den zuvor blockierten Auftrag wieder freigibt, so daß die Aufzeichnung der mit dem Anforderungstelegramm spezifizierten Daten erneut beginnt.

Die Anwenderprogramme werden im Programmiergerät mittels einer dafür vorgesehenen Software in Maschinenbefehle des Automatisierungsgerätes übersetzt. Dabei kann es sich um direkt vom Prozessor des Automatisierungsgerätes ausführbare Befehle handeln oder um eine Zwischensprache, die im Automatisierungsgerät zunächst interpretiert oder aber von der Firmware des Automatisierungsgerätes in Befehle des Prozessors des Automatisierungsgerätes übersetzt wird. Grundsätzlich wird bei der Übersetzung Wert auf kurzen, schnell ablauffähigen Code gelegt.

Auf einem Automatisierungsgerät, dessen Prozessor oder dessen Prozessoren mittels handelsüblicher Mikrocontroller realisiert werden, muß das Maschinenmodell des Automatisierungsgerätes auf das Speichermodell des Mikrocontrollers übertragen werden. Zum Beobachten muß zusätzlicher Code in das übersetzte Anwenderprogramm eingefügt werden. Dies erfordert im allgemeinen einen besonderen Übersetzungslauf. Findet das Übersetzen in der Firmware des Automatisierungsgerätes statt, ergibt sich eine Zykluszeitbelastung durch die Übersetzung und das Einketten der sich ergebenden zusätzlichen Befehle. Findet das Übersetzen im Programmiergerät statt, ergibt sich eine Zykluszeitbelastung durch das Herunterladen und das Einketten der zusätzlichen Befehle. In beiden Fällen kann die Zykluszeitbelastung durch passende Auswahl der zu beobachtenden Codeadressen minimiert werden.

Damit in Zeiten, in denen ein Beobachtungsauftrag blockiert ist, keine Zykluszeitbelastung auftritt, sind die für die Beobachtung nötigen Befehle maskierbar. Eine Aufzeichnung der angeforderten Daten erfolgt damit nur dann, wenn die entsprechenden Befehle nicht maskiert sind. Nach Beendigung des Zyklus ist der Auftrag durch die Firmware blockierbar, sofern dies nicht schon bei der Aufzeichnung geschieht. Abschließend werden die aufgezeichneten Daten an das Programmiergerät gesandt.

Bei einem Automatisierungsgerät, welches die Maschinenbefehle interpretiert, bewirkt der Interpreter die Abbildung des Maschinenmodells auf den realen Speicher. Dabei spielt es für die folgende Betrachtung keine Rolle, ob der Interpreter durch einen anwenderspezifischen Schaltkreis (ASIC) oder durch ein Programm auf einem handelsüblichen Mikrocontroller realisiert wird. Die Firmware markiert die zu beobachtenden Befehle, wozu sie zumindest 1 Bit pro Befehl benötigt. Trifft der Interpreter auf einen markierten Befehl, unterbricht er die Ausführung und zeichnet die angeforderten Daten auf. Danach kann die Ausführung fortgesetzt werden. Diese Unterbrechung muß wie bei den übersetzenden Maschinen maskierbar sein, damit in den Zeiten, in denen der Auftrag blockiert ist, keine Zykluszeitbelastung auftritt. Analog wie bei den übersetzenden Maschinen ist der Auftrag nach Beendigung des Zyklus durch die Firmware blockierbar, sofern dies nicht schon bei der Aufzeichnung geschieht. Abschließend werden die aufgezeichneten Daten an das Programmiergerät gesandt.

Gemäß einer weiteren Ausgestaltung ist vorgesehen, einen Beobachtungsauftrag mit Bedingungen zu versehen, damit bei Bausteinen, die in einem Zyklus mehrfach ausgeführt werden, eine spezielle Ausführung beobachtbar ist. Darüber hinaus ist in einem Auftrag unterscheidbar, wie bei mehrfacher Ausführung der Befehle innerhalb eines Bausteins zu reagieren ist. Eine derartige Mehrfachausführung tritt im Baustein auf, wenn durch Sprünge im Baustein Schleifen entstehen. Im Beobachtungsauftrag kann beispielsweise eingestellt werden, ob der Auftrag durch die Mehrfachausführung blockiert wird oder nicht. Wird er bei der zweiten Ausführung einer Codeadresse nicht blockiert, so werden die Daten für diese Codeadresse überschrieben, so daß im Ergebnis die Daten des letzten Schleifendurchgangs für einen tatsächlichen Transfer an das Programmiergerät zur Verfügung stehen. Würde dagegen bei jedem Schleifendurchgang ein Transfer erfolgen, hätte dies eine hohe Zykluszeitbelastung zur Folge. Die Zykluszeitbelastung kann weiter gesenkt werden, indem beim ersten Auftreten einer Mehrfachausführung die Aufzeichnung blockiert wird, so daß nur die Daten des ersten Schleifendurchgangs transferiert werden.

Das Verfahren erlaubt es, zu jedem Baustein mehrere Codeadressen und zu jeder Codeadresse mehrere Datenadressen anzugeben. Die Codeadresse definiert einen einzelnen Maschinenbefehl. Mit den Datenadressen sind alle im Maschinenmodell vorhandenen Speicherbereiche ansprechbar, auch die Register. Das Verfahren minimiert die aufzuzeichnenden und zu transferierenden Daten und die mit der Aufzeichnung und dem Transfer einhergehende Zykluszeitbelastung auf ein Minimum. Diese Minimierung ist unabhängig von der Sprache, in der das Anwenderprogramm erstellt wurde und der Art der Zielmaschine.

Weitere Merkmale, Vorteile und Anwendungsmöglichkeiten der Erfindung ergeben sich aus den Unteransprüchen, der nachfolgenden Beschreibung eines Ausführungsbeispiels, anhand der Figuren und der Figuren selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen oder deren Rückbeziehung.

In den Figuren zeigen
- FIG 1: das Anforderungstelegramm und
- FIG 2: das Empfangstelegramm.

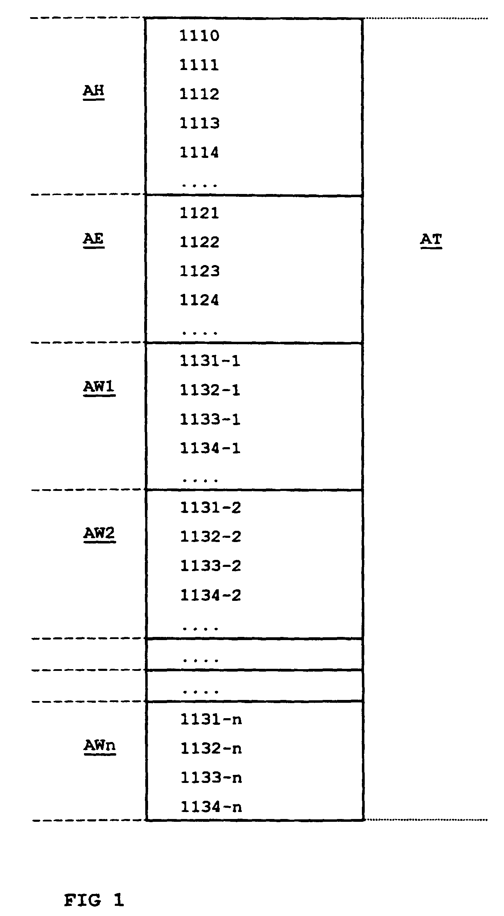

Gemäß FIG 1 weist das Anforderungstelegramm AT zumindest ein Headersegment AH, ein Einstiegsdatensatzsegment AE sowie ein oder mehrere Watchpointsegmente AW1, AW2, ..., AWn auf. Im Headersegment AH oder kurz im Header AH ist zumindest die Auftragskennung 1110, eine Codierung des Bausteins 1111, auf das sich das Anforderungstelegramm bezieht, codiert nach Typ und Nummer, sowie eine Triggerbedingung 1112, eine Kennung hinsichtlich eventueller Mehrfachausführungen 1113 sowie die Anzahl der Watchpoints ohne Einstiegsdatensatz 1114 angegeben.

Der Einstiegsdatensatz AE, der im Gegensatz zu den Watchpoints die jeweiligen Überwachungswerte, insbesondere die Register, vor der Befehlsausführung zeigt, umfaßt eine Codeadresse 1121, Register 1122, eine Kennung hinsichtlich der Anzahl der nachfolgenden Datenadressen 1123 sowie die durch die Kennung 1123 vorgegebene Anzahl von Datenadressen 1124.

Ganz analog zum Einstiegsdatensatz AE ist der Aufbau der Watchpointsegnente AW1, AW2, ..., AWn. Jedes dieser Watchpointsegmente AW1, AW2, ..., AWn umfaßt eine Codeadresse 1131-1, 1131-2, 1131-n ("-1" referenziert das erste Watchpointsegment AW1, entsprechend referenziert "-2" das zweite Watchpointsegment und "-n" das Watchpointsegment AWn. Für die nachfolgende Beschreibung werden die zusätzlichen Referenzierungen, wo dies nicht unbedingt erforderlich ist, ausgelassen.) Darüber hinaus umfaßt jedes Watchpointsegment Daten über die relevanten Register 1132, eine Kennung hinsichtlich der Anzahl der nachfolgenden Datenadressen 1133 und die entsprechend der Kennung 1133 vorgegebene Anzahl von Datenadressen 1134.

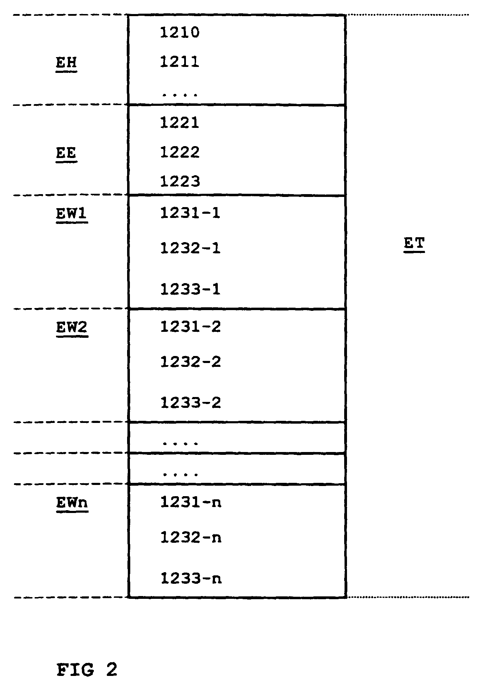

Gemäß FIG 2 umfaßt das Empfangstelegramm ET zumindest den Header EH, Einstiegsdaten EE sowie Watchpointdaten EW1, EW2, ..., EWn. Im einzelnen umfaßt der Header EH zumindest eine Auftragskennung 1210 sowie eine Auftragsnummer 1211. Die Einstiegsdaten umfassen zumindest die Codeadresse 1221, Registerwerte 1222 und Datenwerte 1223. Ganz analog umfassen die Watchpointdaten EW1, EW2, ..., EWn zumindest die Codeadresse 1231, Registerwerte 1232 und Datenwerte 1233.

Mittels der Auftragsnummer 1211 werden gleichzeitig vorhandene Aufträge unterschieden. Ein eineindeutige Auftragsnummer 1211 wird automatisch bei der Auftragsvergabe vom Automatisierungsgerät zugewiesen. Die Größe der für die Registerwerte, 1222, 1232-1, 1232-2, ..., 1232-n vorgesehenen Segmente des Empfangstelegramms ET ist abhängig von Art und Anzahl der angeforderten Register; ganz analog ist die Größe der für die Datenwerte 1233, 1233-1, 1233-2, ...., 1233-n vorgesehenen Segmente des Empfangstelegramms ET abhängig von Art und Anzahl der angeforderten Daten.

Im Empfangstelegramm ET müssen nicht sämtliche Codeadressen des Anforderungstelegramms AT vorhanden sein, da eventuelle Sprünge bei der Ausführung des zu überwachenden Programms dazu führen können, daß Teile des zu überwachenden Programms nicht ausgeführt werden und bestimmte im Anforderungstelegramm AT spezifizierte Codeadressen nicht erreicht werden.

Der Einstiegsdatensatz EE ist stets vorhanden, jedoch muß dessen Codeadresse 1221 nicht mit der Codeadresse der Anforderung 1121 übereinstimmen, da ein Sprung über diese erste Adresse im beobachteten Zyklus vorgekommen sein könnte.

Der Datenverkehr zwischen Programmiergerät und Automatisierungsgerät, die zu diesem Zweck mittels eines Datenübertragungskabels in geeigneter, nicht dargestellter, jedoch allgemein bekannter Weise miteinander gekoppelt sind, wird nachfolgend dargestellt.

Sobald der Anwender eine Beobachtung startet, wird auf der Seite des Programmiergeräts ein Anforderungstelegramm AT aufgebaut. Dieses Anforderungstelegramm AT wird an das Automatisierungsgerät übermittelt. Das Automatisierungsgerät empfängt das Anforderungstelegramm AT, akzeptiert es, sofern die Struktur des Anforderungstelegramms AT den erwarteten Vorgaben entspricht und vergibt eine Auftragsnummer 1211. Danach wird der Auftrag als blockiert markiert.

Das Automatisierungsgerät sendet eine positive Quittung mitsamt der Auftragsnummer 1211 an das Programmiergerät. Das Programmiergerät vermerkt mit dem Eingang der positiven Quittung den Auftrag als akzeptiert.

Sodann wird auf seiten des Programmiergeräts ein Freigabetelegramm aufgebaut. Dieses Freigabetelegramm wird an das Automatisierungsgerät übermittelt, wobei auf seiten des Automatisierungsgerätes der Auftrag mit dem Eingang des Freigabetelegramms als freigegeben markiert wird.

Als Antwort sendet das Automatisierungsgerät eine positive Quittung an das Programmiergerät, wobei auf seiten des Programmiergerätes der Auftrag mit Eingang der positiven Quittung als freigegeben vermerkt wird.

Wenn während der Ausführung des Anwenderprogramms im Automatisierungsgerät zu einem bestimmten Zeitpunkt die Triggerbedingung 1112, die im Header AH des Anforderungstelegramms AT spezifiziert ist, erfüllt ist, beginnt die Aufzeichnung der vom Benutzer zur Beobachtung ausgewählten Daten. Im einfachsten Fall besteht die Triggerbedingung im Erreichen einer der im Anforderungstelegramm AT angegebenen Codeadressen 1131-1, 1131-2, ..., 1131-n; es sind aber komplexere Triggerbedingungen denkbar, wie z.B. "Aufrufpfad" oder "aufgeschlagene Datenbausteine". Im Falle, daß ein Baustein von mehreren anderen Bausteinen innerhalb eines Zyklus verwendet wird, ist es damit möglich, eine spezielle Ausführung der Codeadressen in diesem Zyklus beobachten. Der Aufrufpfad beschreibt eine Bausteinhierachie die nötig ist, damit die Aufzeichnung beginnt. Die Bedingung aufgeschlagene Datenbausteine erfordert, daß zu Beginn der Aufzeichnung die angegebenen Datenbausteine aufgeschlagen sind. Die Bedingungen können einzeln oder kombiniert verwendet werden.

Wird also z.B. bei einer einfachen Triggerbedingung der obengenannten Art die durch die Adresse 1131-1 des Antworttelegramms AT referenzierte Codeadresse bei der Ausführung des Anwenderprogramms erreicht, werden die durch das Datum 1132-1 referenzierten Register, die durch Datum 1133-1 referenzierte Anzahl von Datenadressen und dabei insbesondere die durch das Datum 1134-1 referenzierten Daten aufgezeichnet.

Nachdem diese Aufzeichnung beendet ist, wird ein Ergebnistelegramm aufgebaut, das zumindest diese aufgezeichneten Daten enthält. Der entsprechende Auftrag wird blockiert. Daraufhin wird das Ergebnis in Form eines Ergebnistelegramms ET an das Programmiergerät übermittelt.

Auf der Seite des Programmiergerätes kann das Ergebnis nunmehr dargestellt werden, wobei für den Fall, daß die durch das Datum 1231-1 referenzierte Codeadresse am Bildschirm dargestellt wird, in Verbindung mit dieser Codeadresse die Registerwerte 1232-1 und die Datenwerte 1233-1 darstellbar sind.

Nach der Darstellung des Ergebnisses wird erneut ein Freigabetelegramm an das Automatisierungsgerät gesendet, um den Auftrag erneut freizugeben. Das Automatisierungsgerät übermittelt eine positive Quittung an das Programmiergerät, sobald der Auftrag freigegeben ist. Das Programmiergerät vermerkt den Auftrag als freigegeben mit dem Eingang dieser positiven Quittung. Damit sind die Bedingungen wieder derart hergestellt, daß beim nächsten Erreichen der Triggerbedingung die Aufzeichnung erneut beginnt und die aufgezeichneten Daten schließlich zur Darstellung an das Programmiergerät übermittelt werden.

Diese Schritte wiederholen sich so lange, bis der Anwender den Auftrag beendet.

## Patentansprüche

1. Verfahren zum Betrieb eines zumindest ein Automatisierungsgerät sowie ein mit diesem kommunikativ verbundenes Programmiergerät umfassenden Automatisierungssystems, wobei das Automatisierungsgerät ein Anwenderprogramm, insbesondere ein Programm zur Steuerung und/oder Überwachung eines externen technischen Prozesses, ausführt und wobei durch das Programmiergerät die Ausführung des Anwenderprogramms überwacht wird, indem am Programmiergerät eine oder mehrere Datenadressen (1132, 1133) des Anwenderprogramms zur Überwachung ausgewählt werden,
**dadurch gekennzeichnet**,
- daß am Programmiergerät für jede zur Überwachung ausgewählte Datenadresse (1132, 1133) eine Codeadresse (1131) - eine Adresse des Anwenderprogramms, insbesondere eine Adresse in unmittelbarer Nähe eines den Inhalt der ausgewählten Datenadresse (1132, 1133) beeinflussenden Abschnitts des Anwenderprogramms - ausgewählt wird,
- daß die ausgewählte Datenadresse (1132, 1133) zusammen mit der Codeadresse (1131) im Rahmen eines Anforderungstelegramms (AT) an das Automatisierungsgerät übermittelt wird,
- daß der Inhalt der ausgewählten Datenadresse (1132, 1133) bei Erreichen der jeweiligen Codeadresse (1131) während der Ausführung des Anwenderprogramms aufgezeichnet wird und
- daß der aufgezeichnete Inhalt der Datenadresse (1132, 1133) im Rahmen eines Ergebnistelegramms (ET) an das Programmiergerät übermittelt wird.

2. Verfahren nach Anspruch 1,
**dadurch gekennzeichnet**,
daß über eine Datenadresse (1132, 1133) alle im Automatisierungsgerät vorhandenen Speicherbereiche, insbesondere auch Register, referenzierbar sind.

3. Verfahren nach Anspruch 1 oder 2,
**dadurch gekennzeichnet**,
daß die angeforderten Daten vom Automatisierungsgerät aufgezeichnet werden, sofern bei Erreichen der Codeadresse (1131) eine Triggerbedingung erfüllt ist.

4. Verfahren nach Anspruch 1,
**dadurch gekennzeichnet**,
daß das Anforderungstelegramm (AT) ein Headersegment (AH), ein Einstiegsdatensatzsegment (AE) sowie ein oder mehrere Watchpointsegmente (AW1, AW2...AWn) mit jeweils zumindest einer Codeadresse (1131-1, 1131-2...1131-n) und einer oder mehreren Datenadressen (1132-1, 1133-1, 1132-2, 1133-2 ... 1132-n, 1133-n) aufweist.

5. Verfahren nach Anspruch 1,
**dadurch gekennzeichnet**,
daß das Ergebnistelegramm (ET) ein Headersegment (EH), ein Einstiegsdatensatzsegment (EE) sowie ein oder mehrere Watchpointsegmente (EW1, EW2...EWn) mit jeweils zumindest einer Codeadresse (1231-1, 1231-2...1231-n) und einer oder mehreren Datenadressen (1232-1, 1233-1, 1232-2, 1233-2 ... 1232-n, 1233-n) aufweist.

6. Verfahren nach Anspruch 1,
**dadurch gekennzeichnet**,
daß die angeforderten Daten vom Automatisierungsgerät aufgezeichnet und zu geeigneten Zeitpunkten während der Ausführung des Anwenderprogramms, bei zyklischen Anwenderprogrammen insbesondere nach jedem Zyklus, an das Programmiergerät übermittelt werden.

7. Verfahren nach Anspruch 6,
**dadurch gekennzeichnet**,
daß bei zyklischen Anwenderprogrammen die angeforderten Daten vom Automatisierungsgerät aufgezeichnet und während mehrerer Zyklen abschnittsweise an das Programmiergerät übermittelt werden.

8. Verfahren nach einem der obigen Ansprüche,
**dadurch gekennzeichnet**,
daß die für die Beobachtung nötigen Befehle im Anwenderprogramm maskierbar sind.

9. Verfahren nach einem der obigen Ansprüche,
**dadurch gekennzeichnet**,
daß ein bei Eingang des Anforderungstelegramms (AT) auf Seiten des Automatisierungsgerätes generierter Anforderungsauftrag bei Mehrfachausführung eines mit einer im Anforderungstelegramm festgelegten Codeadresse (1131-1, 1131-2 ... 1131-n) korrespondierenden Befehls blockiert wird.
